# EUROPEAN PATENT SPECIFICATION

(11) **EP 2 275 707 B1**
(45) Date of publication and mention of the grant of the patent: **20.06.2012**
(21) Application number: 10167103.0
(22) Date of filing: 24.06.2010
(51) Int. Cl.: F16H 57/02, F16H 63/48, F16H 37/02

(54) **Automatic transmission with air breather structure**
Automatikgetriebe mit Entlüftungsstruktur
Transmission automatique avec structure d'aération

(30) Priority: 15.07.2009 JP 2009166443
(43) Date of publication of application: 19.01.2011
(73) Proprietor: JATCO Ltd, Fuji-shi, Shizuoka 417-8585 (JP)
(72) Inventor: Ueno, Yoshiteru, Fuji-shi Shizuoka 417-8585 (JP); Yasui, Kenjiro, Fuji-shi Shizuoka 417-8585 (JP); Nagasaki, Shigeru, Fuji-shi Shizuoka 417-8585 (JP)
(74) Representative: Grünecker, Kinkeldey, Stockmair & Schwanhäusser

(56) References cited:
- EP-A2- 1 643 169
- JP-A- 2000 220 728
- JP-A- 2001 099 273
- JP-A- 2009 124 822
- JP-U- 56 155 173

## Description

### BACKGROUND OF THE INVENTION

### 1. Field of the Invention

The present invention relates in general to automotive automatic transmissions and more particularly to the automotive automatic transmissions of a type that is equipped with an air breather structure.

### 2. Description of the Related Art

Usually, automotive automatic transmissions are constructed to contain in a transmission casing thereof a given amount of oil. The transmission casing is provided at an upper portion thereof with an air breather chamber for releasing to the outside of the casing air pressure (viz., internal pressure) that increases in the casing when the transmission is in operation.

JP 2001-099273 discloses an automatic transmission according to the preamble of claim 1.

Under operation of the automatic transmission, the oil in the transmission casing is splashed by rotation members, such as gears or the like in the transmission casing, and thus, if the interior of the transmission casing is subjected to an atmospherically severe condition due to some reasons, it tends to occur that the splashed oil is forced to blow out to the outside of the casing through the air breather chamber together with the pressurized air.

Hitherto, for suppressing such undesired oil blow-out phenomenon, various measures have been proposed and put into practical use. One of them is disclosed in Japanese Laid-open Patent Application (Tokkaisho) 63-246568.

In the measures of this publication, a plurality of alternately arranged projections are provided on an inner surface of the transmission casing to provide the air breather chamber with a labyrinth structure. Due to the nature of the labyrinth structure, the undesired oil blow-out phenomenon is effectively suppressed.

### SUMMARY OF THE INVENTION

However, as will be easily understood, providing the air breather chamber with such labyrinth structure brings about not only a complicated structure of the transmission casing but also a need of providing a certain space in the casing for the labyrinth structure, which thus causes a bulky construction of the transmission casing.

Accordingly, it is an object of the present invention to provide an automatic transmission with an improved air breather structure, which is free of the above-mentioned drawbacks.

That is, according to the present invention, there is provided an automatic transmission with an improved air breather structure, which suppresses or at least minimizes the undesired oil blow-out phenomenon from an air breather chamber and allows the transmission casing to be made simple in construction and compact in size.

In accordance with the present invention as defined in claim 1, there is provided an automatic transmission which comprises a transmission casing that houses therein a speed change mechanism and a parking mechanism, the speed change mechanism including a plurality of rotating members; an air breather chamber provided by the transmission casing, the air breather chamber being communicated with the outside air; and a breather chamber opening through which an interior of the transmission casing and the air breather chamber are fluidly communicated with each other, the breather chamber opening being exposed to the interior of the transmission casing, wherein the transmission casing has a predetermined housing space to which the breather chamber opening as well as the rotating members are exposed, the parking mechanism is projected into the predetermined housing space at a position between the breather chamber opening and each of the rotating members, the breather chamber opening is positioned above the rotating members under a normal positional condition, and the breather chamber opening is positioned in the vicinity of the parking mechanism.

### BRIEF DESCRIPTION OF THE DRAWINGS

Other objects and advantages of the present invention will become apparent from the following description when taken in conjunction with the accompanying drawings, in which:
Fig. 1 is a schematic illustration of an automatic transmission of the present invention, showing a power train possessed by a corresponding wheeled motor vehicle powered by an internal combustion engine;
Fig. 2 is an enlarged sectional view of the automatic transmission of the present invention;
Fig. 3 is a plan view taken from the direction of the arrow "III" of Fig. 2 with a converter housing removed;
Fig. 4 is a perspective view of the automatic transmission at a position where a parking mechanism is arranged;
Fig. 5 is a plan view of a transmission casing of the automatic transmission with various parts installed therein;
Fig. 6A is a sectional view taken along the line "6A-6A" of Fig. 3;
Fig. 6B is a sectional view taken along the line "6B-6B" of Fig. 3; and
Fig. 7 is a plan view of a bearing retainer employed in the automatic transmission of the present invention.

### DETAILED DESCRIPTION OF THE INVENTION

In the following, an automotive transmission with an improved air breather structure according to the present invention will be described in detail with reference to the accompanying drawings.

For ease of understanding, various directional terms, such as right, left, upper, lower, rightward and the like are used in the description. However, such terms are to be understood with respect to only a drawing or drawings on which a corresponding element or portion is shown.

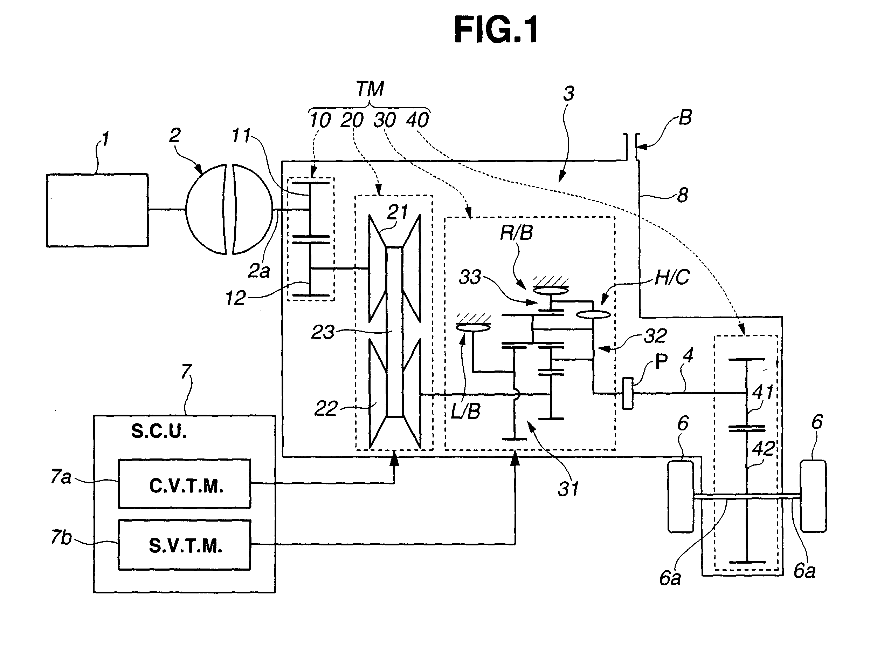

In Fig. 1, there is schematically shown a power train that includes an internal combustion engine 1 as a power plant, a torque converter 2 that is operatively connected to and driven by engine 1, an automatic transmission 3 of the present invention that is operatively connected to and driven by torque converter 2 and road wheels 6 and 6 that are operatively connected to automatic transmission 3 through drive shafts 6a and 6a.

As is shown in the drawing, automatic transmission 3 of the invention is of a double transmission type that comprises a continuously variable transmission mechanism 20 and a stepwise variable transmission mechanism (or sub-transmission mechanism) 30.

Automatic transmission 3 is controlled by a speed control unit (or S.C.U.) 7 that includes a continuously variable transmission mechanism control section (or C.V.T.M.) 7a that controls the continuously variable transmission mechanism 20 and a stepwise variable transmission mechanism control section (or S.V.T.M.) 7b that controls the stepwise variable transmission mechanism 30.

Automatic transmission 3 comprises a transmission mechanism TM installed in a transmission casing 8, a parking mechanism P installed in transmission casing 8 and an air breather structure B provided by transmission casing 8.

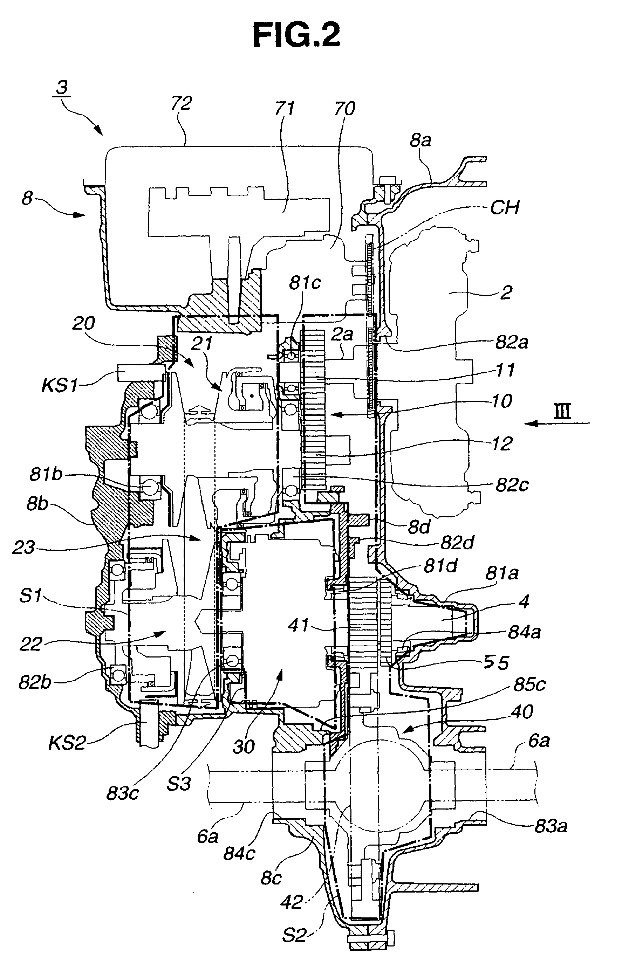

As is seen from Fig. 2, transmission casing 8 comprises a converter housing 8a, a transmission cover 8b, a transmission case (or intermediate wall) 8c and a bearing retainer (or shaft supporting wall) 8d.

As shown in Fig. 2, converter housing 8a is formed with an enlarged recessed portion 81a to which a torque converter 2 is mounted. Enlarged recessed portion 81a constitutes a shell part of transmission casing 8 at the torque converter side. Converter housing 8a is formed with an input shaft receiving opening 82a through which an output shaft 2a of torque converter 2 passes, and a drive shaft receiving openings 83a through which one of the drive shafts 6a (or right drive shaft) projects.

As shown, input shaft receiving opening 82a is located in a central portion of the enlarged recessed portion 81a, and converter housing 8a is formed with a concave recess (no numeral) that is equipped with an output shaft bearing 84a that bears an output shaft 4 of the transmission 3.

Transmission cover 8b covers an axial end of each of after-mentioned primary and secondary pulleys 21 and 22 of continuously variable transmission mechanism 20, and constitutes a shell part of transmission casing 8 at the torque converter opposite side. Transmission cover 8b is provided at an opening thereof with a primary pulley bearing 81b that bears primary pulley 21 and at another opening thereof with a secondary pulley bearing 82b that bears secondary pulley 22. To transmission cover 8b, there are connected a primary pulley rotation speed sensor KS1 that detects a rotation speed of primary pulley 21, and a secondary pulley rotation speed sensor KS2 that detects a rotation speed of secondary pulley 22.

As shown, each sensor KS1 or KS2 is tightly held in an opening (no numeral) formed in transmission cover 8b.

Transmission case 8c is located between the above-mentioned converter housing 8a and transmission cover 8b and arranged to constitute an intermediate wall by which the interior of transmission casing 8 is divided into two (or left and right) spaces. That is, by and between transmission cover 8b and transmission case 8c, there is defined a first transmission housing space S1 that houses therein continuously variable transmission mechanism 20, and by and between converter housing 8a and transmission case 8c, there is defined a second transmission housing space S2 that houses therein parking mechanism P.

Transmission case 8c is provided with an output shaft bearing 81c that bears an output shaft 2a of torque converter 2, a primary pulley bearing 82c that bears an input shaft (no numeral) of primary pulley 21 and a secondary pulley bearing 83c that bears an output shaft of secondary pulley 22. Furthermore, transmission case 8c is formed with a drive shaft receiving opening 84c through which the other (or left) drive shaft 6a projects.

Furthermore, as shown in Fig. 2, transmission case 8c is formed with an enlarged recessed portion 85c for installing therein the above-mentioned stepwise variable transmission mechanism 30. As shown, secondary pulley bearing 83c is placed at a center area of enlarged recessed portion 85c.

Bearing retainer 8d is fixed to the above-mentioned transmission case 8c in a manner to cover enlarged recessed portion 85c. With provision of bearing retainer 8d, the interior of recessed portion 85c is isolated from the second transmission housing space S2. That is, by and between transmission case 8c and bearing retainer 8d, there is defined a third transmission housing space S3 that houses therein stepwise variable transmission mechanism 30.

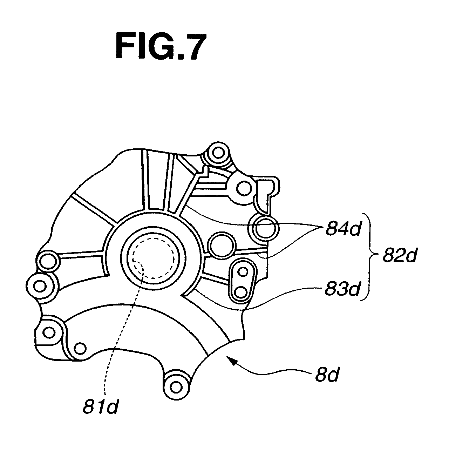

As is seen from Figs. 2 and 7, bearing retainer 8d is provided at an opening thereof with an output shaft bearing 81d that bears transmission output shaft 4 that is operatively connected to an outlet part of stepwise variable transmission mechanism 30.

Bearing retainer 8d is formed with a plurality of ribs 82d that project into the second transmission housing space S2 (see Fig. 2).

As is seen from Fig. 7, the ribs 82d comprise a circumferentially extending rib 83d that extends about output shaft bearing 81d and a plurality of radially extending ribs 84d that extend radially outward from the circumferentially extending rib 83d. As shown, radially extending ribs 84d are spaced from one another.

In the following, transmission mechanism TM will be described in detail with the aid of the drawings.

As will be understood from Figs. 1 and 2, transmission mechanism TM comprises a speed change gear unit 10, the above-mentioned continuously variable transmission mechanism 20, the above-mentioned stepwise variable transmission mechanism 30 and a final drive gear unit 40.

Speed change gear unit 10 comprises a drive gear (or rotating member) 11 that is connected to an output shaft 2a of torque converter 2 and a driven gear 12 (or rotating member) that is meshed with drive gear 11 and connected to the input shaft of primary pulley 21 of continuously variable transmission mechanism 20. By changing the number of teeth of each gear 11 or 12, a speed ratio between these two gears 11 and 12 can be varied at will.

Continuously variable transmission mechanism 20 is a known mechanism that comprises primary pulley 21 of which input shaft is connected to driven gear 12 to receive a power from speed change gear unit 10, secondary pulley 22 of which output shaft is connected to stepwise variable transmission mechanism 30, and an endless belt 23 that is operatively put on both primary and secondary pulleys 21 and 22. Although not shown in the drawings, each of primary and secondary pulleys 21 and 22 is equipped with a hydraulic actuator, so that a thickness of pulley 21 or 22 is varied in accordance with a hydraulic pressure applied to the hydraulic actuator. Thus, by controlling the hydraulic pressure applied to the respective hydraulic actuators, a speed ratio between primary and secondary pulleys 21 and 22 can be continuously varied.

As is seen from Fig. 2, primary pulley 21 is rotatably held by both primary pulley bearing 81b provided on transmission cover 8b and another primary pulley bearing 82c provided on transmission case 8c. Secondary pulley 22 is rotatably held by both secondary pulley bearing 82b provided on transmission cover 8b and another secondary pulley bearing 83c provided on transmission case 8c. Thus, continuously variable transmission mechanism 20 is received in the first transmission housing space S1 that is defined by transmission cover 8b and transmission case 8c.

In this Fig. 2, denoted by numeral 70 is an oil pump, 71 is a valve control unit and 72 is an oil pan. A drive shaft (no numeral) of oil pump 70 is connected to output shaft 2a of torque converter 2 through an endless chain CH, so that oil pump is powered by output shaft 2a of torque converter 2.

Referring back to Fig. 1, stepwise variable transmission mechanism 30 comprises a ravigneaux type planetary gear mechanism. As shown, a compound sun gear 31 of the ravigneaux type planetary gear mechanism is connected to secondary pulley 22 of continuously variable transmission mechanism 20, so that compound sun gear 31 serves as a power input means. A pinion carrier 32 of the mechanism is connected to the transmission output shaft 4, so that pinion carrier 32 serves as a power output means.

Compound sun gear 31 is connected to transmission casing 8 through a low brake L/B (viz., brake for selecting first speed), and pinion carrier 32 is connected to a ring gear 33 through a high clutch H/C (viz., clutch for selecting second speed). Ring gear 33 is connected to transmission casing 8 through a reverse brake R/B.

Also in stepwise variable transmission mechanism 30, low brake L/B, high clutch H/C and reverse brake R/B are of a hydraulically actuated device. By controlling hydraulic pressure applied to the devices, ON/OFF (viz., engaged/disengaged) condition of the devices is selectively effected, so that stepwise variable transmission mechanism 30 takes "forward first speed", "forward second speed" and "reverse first speed" selectively.

That is, for effecting forward first speed, only the low brake L/B is engaged. For effecting forward second speed, only the high clutch H/C is engaged, and for effecting reverse first speed, only the reverse brake R/B is engaged.

When the speed change is effected by stepwise variable transmission mechanism 30, a so-called cooperative control is carried out together with continuously variable transmission mechanism 20, so as to suppress or at least minimize a shift shock.

The input shaft of stepwise variable transmission mechanism 30 is connected to secondary pulley 22 that is rotatably held by the secondary pulley bearing 83c of transmission case 8c, and the output shaft of the transmission mechanism 30 is connected to the transmission output shaft 4 that is rotatably held by output shaft bearing 81d of bearing retainer 8d. With this arrangement, stepwise variable transmission mechanism 30 is received in the third transmission housing space S3 that is defined by both transmission case 8c and bearing retainer 8d.

As will be understood from Figs. 1 and 2, final drive gear unit 40 comprises a drive gear (or rotating member) 41 that is connected to the transmission output shaft 4 that projects from bearing retainer 8d toward converter housing 8a, and a driven gear (or rotating member) 42 that is connected to drive shafts 6a and 6a that are respectively connected to road wheels 6 and 6 while passing through both converter housing 8a and transmission case 8c. By changing the number of teeth of each gear 41 or 42, a speed ratio between these two gears 41 and42 can be changed at will.

It is to be noted that final drive gear unit 40 is received in the second transmission housing space S2 having both drive and driven gears 41 and 42 placed between converter housing 8a and transmission case 8c.

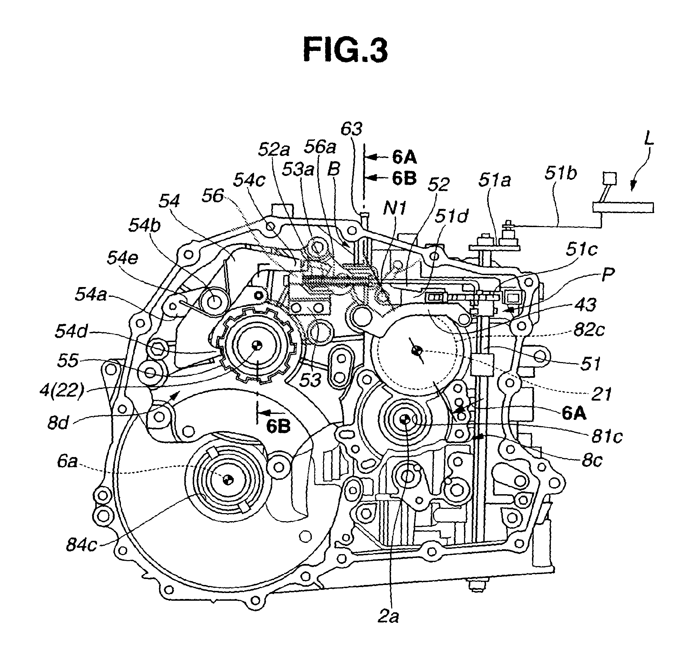

As will be understood from Fig. 3, an upper peripheral portion of driven gear 12 is covered by a cover member 43 connected to transmission case 8c. Cover member 43 has a generally L-shaped cross section.

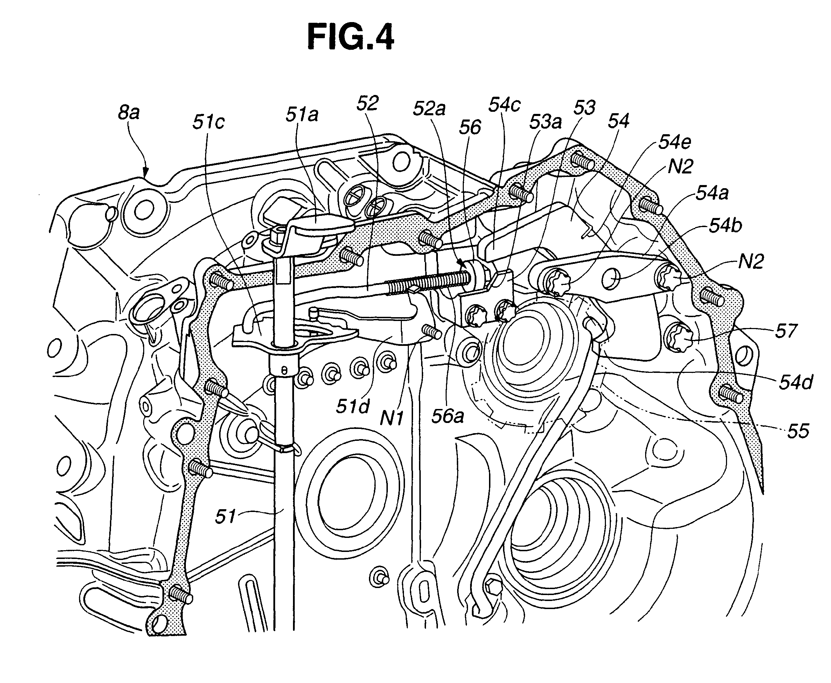

In the following, parking mechanism P will be described in detail with the aid of the drawings, particularly Figs. 3 and 4.

As is seen from Figs. 3 and 4, parking mechanism P comprises a manual shaft 51, a parking rod 52, a support actuator 53, a parking pawl 54 and a parking gear 55.

Manual shaft 51 is vertically movably held by transmission case 8c and has an upper end projected outward from transmission case 8c. As is seen from Figs. 3 and 4, the projected upper end of manual shaft 51 is equipped with a parking plate 51a that is connected through a transmission mechanism 51b to a shift lever L that is manipulated by a driver (not shown). Thus, when shift lever L is manipulated by the driver, manual shaft 51 is turned about its axis.

As is best seen from Fig. 4, parking rod 52 is connected at one end to a detent plate 51c fixed to manual shaft 51 and extends away from manual shaft 51 in a direction that is perpendicular to respective axes of manual shaft 51 and transmission output shaft 4. Thus, upon turning of manual shaft 51 about its axis, parking rod 52 is moved axially.

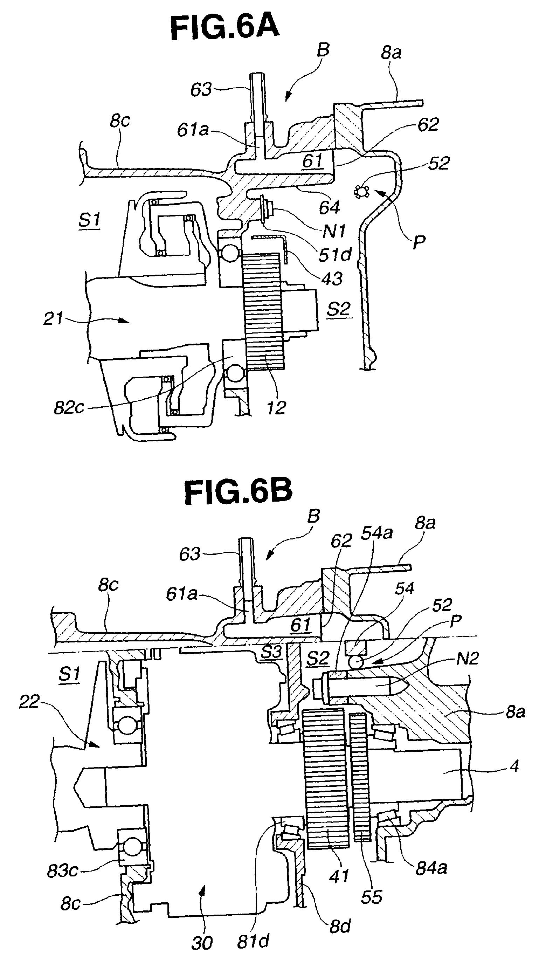

As will be understood from Fig. 3 and Figs. 6A and 6B, parking rod 52 is positioned above driven gear 12 that is connected to primary pulley 21 and placed in the second transmission housing space S2 and above drive gear 41 that is connected to the transmission output shaft 4.

As is seen from Fig. 4, a peripheral portion of detent plate 51c is formed with a plurality of recesses (no numerals) that are detachably and selectively engaged with a leading end of a detent spring 51d that is fixed to transmission case 8c by a fixing screw N1. The recesses of detent plate 51c are positioned in accordance with shift positions of shift lever L, so that detect spring 51d changes the recesses in accordance with the shift position of shift lever L.

As is seen from Fig. 4, onto the other end 52a of parking rod 52, there is slidably disposed a cam 56 that has a conical leading end. Due to a biasing force produced by a spring 56a compressed between parking rod 52 and cam 56, the cam 56 is biased toward the leading end 52a of parking rod 52. As shown, a stopper bolt (no numeral) is fixed to the end 52a of parking rod 52 to hold cam 56.

As is understood from Fig. 4, support actuator 53 has a function to support cam 56. In addition to this function, support actuator 53 is formed with a slope 53a on which cam 56 moves up and down when parking rod 52 is axially moved. As shown, support actuator 53 is fixed to converter housing 8a.

As is seen from Fig. 4, parking pawl 54 is positioned above parking gear 55 and shaped to extend along the periphery of parking gear 55. As shown, parking pawl 54 is swingably put between the converter housing 8a and a holding plate 54a that is fixed to converter housing 8a by fixing screws N2, and parking pawl 54 is arranged to extend along bearing retainer 8d.

Parking pawl 54 has a pivotally held middle part 54b so that parking pawl 54 pivots over a major surface of bearing retainer 8d. One end of parking pawl 54 is formed with a cam receiver 54c that is able to contact with cam 56 and the other end of parking pawl 54 is formed with a pawl 54d that is able to detachably engage with parking gear 55.

Due to a biasing force produced by a spring 54e, parking pawl 54 is biased to pivot away from parking gear 55, that is, in a clockwise direction in Fig. 3.

As is shown in Fig. 4, for providing parking pawl 54 with an initial or rest position (viz., the position taken when parking pawl 54 is not pressed by parking rod 52), a stopper 57 is fixed to converter housing 8a.

As is understood from Fig. 3, parking gear 55 is fixed to bearing retainer 8d at a position above a portion where transmission output shaft 4 projects from bearing retainer 8d. As will be understood from Fig. 2, parking gear 55 is placed between converter housing 8a and drive gear 41 of final drive gear unit 40.

When, now, shift lever L (see Fig. 3) is moved to Parking range (P-range), manual shaft 51 is turned about its axis thereby moving parking rod 52 leftward in Fig. 3. With this, cam 56 rises onto slope 53a of support actuator 53 and moves to a position just below cam receiver 54c of parking pawl 54. With this movement of cam 56, cam receiver 54c is pressed upward thereby turning parking pawl 54 in a counterclockwise direction in Fig. 3 resulting in that pawl 54d is brought into engagement with parking gear 55. Upon this, the transmission output shaft 4 is locked.

As is seen from Fig. 6B, parking gear 55 is placed between converter housing 8a and bearing retainer 8d, and as is seen from Fig. 3, manual shaft 51 and parking rod 52 are supported by transmission case 8c, and as is seen from Fig. 4, support actuator 53 and parking pawl 54 are fixed to converter housing 8a. Thus, the parking mechanism P is placed in the second transmission housing space S2 that is defined by and between converter housing 8a and transmission case 8c.

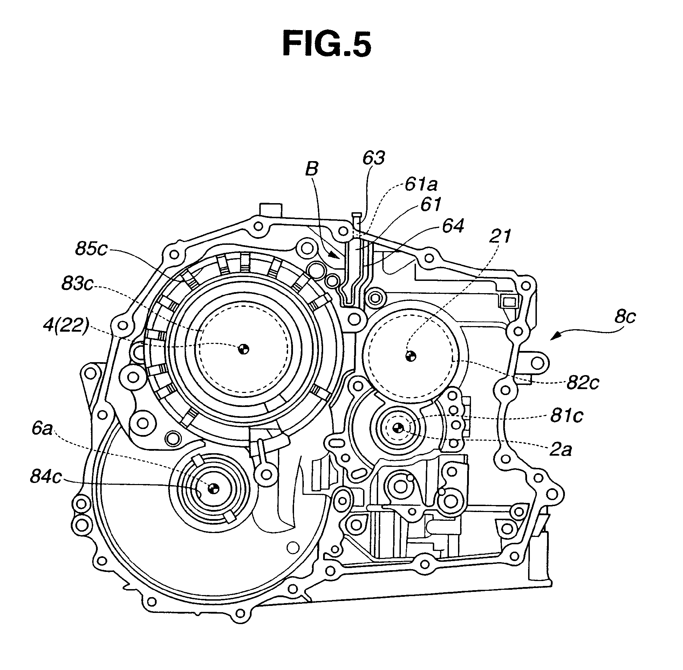

In the following, air breather structure B will be described in detail with the aid of the drawings, particularly Figs. 5, 6A and 6B.

As is seen from Figs. 5, 6A and 6B, air breather structure B is provided by transmission case 8c. Air breather structure B is located at an upper portion of transmission casing 8.

As is seen from the drawings, air breather structure B comprises a breather opening 61a that is formed in transmission case 8c and exposed to the outside of the transmission, an air breather chamber 61 that is connected to breather opening 61a, and a breather chamber opening 62 that is exposed to the interior of transmission casing 8 to communicate air breather chamber 61 with the interior of transmission casing 8.

As is seen from Figs. 6A and 6B, into breather opening 61a, there is tightly put a breather pipe 63 from which a hose (not shown) extends to the outside of the transmission.

As is seen from Fig. 6A, air breather chamber 61 is defined or partitioned by a breather chamber wall 64 that is integral with transmission case 8c and extends from transmission case 8c toward converter housing 8a.

Breather chamber opening 62 is an opening provided by air breather chamber 61 and faces converter housing 8a as is seen from Fig. 6B. As is seen from Figs. 6A and 6B, breather chamber opening 62 is located above both driven gear 12 of speed change gear unit 10 and drive gear 41 of final drive gear unit 40 at a position near parking mechanism P. In the illustrated example, breather chamber opening 62 is located at a side upper position of parking rod 52. Furthermore, breather chamber opening 62 is exposed to the second transmission housing space S2. Accordingly, second transmission housing space S2 is communicated with the outside air through air breather structure B.

In the following, advantageous features of automatic transmission 3 of the present invention will be described with the aid of the drawings.

For ease of understanding, the following description will be made with respect to two major advantageous features, which are (I) Feature that allows transmission casing 8 to have a simple and compact construction and (II) Feature that suppresses or at least minimizes undesired oil blow-out phenomenon from air breather chamber of the transmission.

### (I) Feature that allows transmission casing to have a simple and compact construction:

As has been mentioned hereinabove, transmission mechanism TM (viz., the devices 10, 20, 30 and 40) and parking mechanism P are all installed in transmission casing 8, and transmission casing 8 is provided with air breather structure B.

Air breather structure B has air breather chamber 61 (see Figs. 6A and 6B). Air breather chamber 61 is defined or partitioned by breather chamber wall 64 that is integral with transmission case 8c. Converter housing 8a to which breather chamber opening 62 of air breather chamber 61 faces has no projected portions, such as ribs or the like. This means that transmission casing 8 can be made simple in construction.

Furthermore, since converter housing 8a has no projected portions at the portion to which breather chamber opening 62 faces, converter housing 8a and transmission case 8c can be intimately combined with each other, which permits reduction in distance therebetween. That is, compactness of transmission casing 8 is achieved.

### (II) Feature that suppresses or at least minimizes undesired oil blow-out phenomenon from air breather chamber of transmission:

When a driving force of internal combustion engine 1 is inputted to automatic transmission 3 through torque converter 2, the oil in the second transmission housing space S2 is stirred by drive and driven gears 11 and 12 of speed change gear unit 10 as well as drive and driven gears 41 and 42 of final drive gear unit 40. With such stir, part of the oil is scattered upward toward positions above the gears 11, 12, 41 and 42.

As is mentioned hereinabove and understood from Figs. 6A and 6B, breather chamber opening 62 of air breather structure B is placed above the gears 11, 12, 41 and 42, oriented to face converter housing 8a and located around but near parking mechanism P. While, parking mechanism P is arranged between breather chamber opening 62 and each of the gears 11, 12, 41 and 42, and placed above both driven gear 12 of speed change gear unit 10 and drive gear 41 of final drive gear unit 40.

This means that as will be understood from Figs. 6A and 6B, parking mechanism P is located between breather chamber opening 62 and each of so-called oil splashing paths for gears 11, 12, 41 and 42, serving as blocking means for blocking direct entering of the splashed oil into breather chamber 61 through breather chamber opening 62. More specifically, transmission casing 8 has second transmission housing space S2 to which breather chamber opening 62 as well as the gears 11, 12, 41 and 42 are exposed, and parking mechanism P is projected into second transmission housing space S2 at a position between breather chamber opening 62 and each of the gears 11, 12, 41 and 42. It is to be noted that the projected parking mechanism P serves as a stopper means for stopping direct entering of splashed oil into breather chamber opening 62. That is, without usage of complicated labyrinth structure, undesired oil blow-out phenomenon from breather chamber 61 is suppressed or at least minimized.

As is described hereinabove and as is understood from Fig. 4, in the above-mentioned automatic transmission 3, parking mechanism P comprises parking rod 52 that is axially moved in response to the shift lever handling by the driver, cam 56 that is connected to the leading end 52a of parking rod 52 to move therewith, support actuator 53 that has slope 53a on which cam 56 is moved up and down and parking pawl 54 that is turned and brought into engagement with parking gear 55 when cam 56 is moved up on the slope 53a of support actuator 53.

That is, without usage of specially constructed parking mechanism, undesired oil blow-out phenomenon is reliably and effectively suppressed or at least minimized in the present invention.

Furthermore, in automatic transmission 3, by the transmission case 8c that supports primary and secondary pulleys 21 and 22, the interior of transmission casing 8 is divided into two housing spaces, which are the first transmission housing space S1 that houses therein continuously variable transmission mechanism 20 and second transmission housing space S2 that houses therein parking mechanism P. Breather chamber opening 62 is located near parking mechanism P and opened to the second transmission housing space S2.

That is, by the provision of transmission case 8c, breather chamber opening 62 of breather chamber 61 is separated from continuously variable transmission mechanism 20, so that the oil blown out by primary and secondary pulleys 21 and 22 of the transmission mechanism 20 is effectively blocked by transmission case 8c. With this arrangement, undesired entering of oil into breather chamber opening 62 is much more effectively suppressed.

As will be understood from Fig. 2, the first and second transmission housing spaces S1 and S2 that are partitioned by transmission case 8c are communicated through both an open part where primary pulley bearing 82c for bearing primary pulley 21 is arranged and another open part where secondary pulley bearing 83c for bearing secondary pulley 22 is arranged.

Accordingly, undesired pressure fluctuation in the first transmission housing space S1 is suppressed while allowing the two bearings 82c and 83c to block entering of oil splashed by the pulleys 21 and 22 into air breather chamber 61 through breather chamber opening 62.

Automatic transmission 3 further comprises stepwise variable transmission mechanism 30 that is arranged between secondary pulley 22 and output shaft 4 of the transmission 3. Stepwise variable transmission mechanism 30 is arranged in the third transmission housing space S3 that is separated from the second transmission housing space S2 by bearing retainer 8d that supports the transmission output shaft 4. Parking pawl 54 of parking mechanism P is arranged to swing over a main flat surface of bearing retainer 8d.

Accordingly, as is seen from Fig. 6B, drive gear 41 of final drive gear unit 40 and breather chamber opening 62 of air breather structure B can be compactly arranged in a limited space at lower and upper positions of the space. In other words, due to provision of parking mechanism P exposed to the second transmission housing space S2, a so-called labyrinth effect is obtained and thus the undesired oil blow-out phenomenon from air breather chamber 61 is suppressed or at least minimized.

Because of compact arrangement of stepwise variable transmission mechanism 30 between continuously variable transmission mechanism 20 and the transmission output shaft 4, a sufficiently large ratio coverage of transmission mechanism TM is obtained making the transmission 3 small in size and light in weight by reducing the diameter of drive and driven pulleys 21 and 22 of continuously variable transmission mechanism 20. With this, the associated motor vehicle can exhibit a satisfied fuel consumption and a good acceleration.

In the transmission 3, as is seen from Figs. 2 and 7, bearing retainer 8d that partitions the second and third transmission housing spaces S2 and S3 is formed with ribs 82d that project into the second transmission housing space S2, that is, toward drive and driven gears 41 and 42 of final drive gear unit 40. Thus, oil splashed by the gears 41 and 42 is blocked or prevented by ribs 82d from flying to breather chamber opening 62. Thus, undesired oil blow-out phenomenon from breather chamber 61 is suppressed.

Due to provision of cover member 43 (see Fig. 3) that covers an upper peripheral portion of driven gear 12 connected to primary pulley 21, splashing of oil by driven gear 12 is suppressed.

In the following, advantages of the automatic transmission of the present invention will be briefly described.
(a) The automatic transmission comprises transmission casing 8 that houses therein transmission mechanism TM including a plurality of rotating members (viz., drive gear 11, driven gear 12, drive gear 41 and driven gear 42) and parking mechanism P, air breather chamber 61 that is provided by transmission casing 8 and communicated with the outside air and breather chamber opening 62 that is exposed to the interior of transmission casing 8 to communicate air breather chamber 61 with the interior of transmission casing 8, in which the transmission casing 8 has a predetermined housing space S2 to which the breather chamber opening 62 as well as the rotating members 11, 12, 41 and 42 are exposed, and parking mechanism P is projected into the predetermined housing space S2 at a position between the breather chamber opening 62 and each of the rotating members 11, 12, 41 and 42. Preferably, breather chamber opening 62 is positioned above the rotating members 11, 12, 41 and 42 and placed in the vicinity of parking mechanism P.
   With such arrangement, entering of splashed oil into breather chamber opening 62 is suppressed or minimized thereby suppressing or at least minimizing undesired oil blow-out phenomenon from air breather chamber 61, and transmission casing 8 can be made simple in construction and compact in size.
(b) Parking mechanism P comprises parking rod 52 that is axially moved in response to movement of a shift lever handled by a driver, cam 56 that is slidably mounted to leading end 52a of parking rod 52 and biased toward the leading end 52a by spring 56a, support actuator 53 that has slope 53a on which cam 56 moves up and down and parking pawl 54 that is turned and brought into engagement with parking gear 55 when cam 56 is moved up on slope 53a of support actuator 53.
   Thus, without usage of specially constructed parking mechanism, undesired oil blow-out phenomenon from air breather chamber 61 is suppressed or at least minimized.
(c) Transmission mechanism TM comprises primary pulley 21 as input means, secondary pulley 22 as output means and endless belt 23 that is operatively put on both primary and secondary pulleys 21 and 22 to serve as a power transmitting means. By an intermediate wall (viz., transmission case 8c) that supports primary and secondary pulleys 21 and 22, the interior of transmission casing 8 is divided into first transmission housing space S1 that houses therein continuously variable transmission mechanism 20 and second transmission housing space S2 that houses therein parking mechanism P, and breather chamber opening 62 is arranged to be exposed to second transmission housing space S2.
   With transmission case 8c, oil splashed by primary and secondary pulleys 21 and 22 in continuously variable transmission mechanism 20 is suppressed from entering breather chamber opening 62. Thus, undesired oil blow-out phenomenon from air breather chamber 61 is suppressed or at least minimized.
(d) First transmission housing space S1 and second transmission housing space S2 are communicated through both an open part where primary pulley bearing 82c for bearing primary pulley 21 is arranged and another open part where secondary pulley bearing 83c for bearing secondary pulley 22 is arranged.
   Thus, undesired pressure fluctuation in first transmission housing space S1 is suppressed while allowing the two bearings 82c and 83c to block entering of oil splashed by the two pulleys 21 and 22 into air breather chamber 61 through breather chamber opening 62.
(e) Stepwise variable transmission mechanism 30 is arranged between secondary pulley 22 and transmission output shaft 4, stepwise variable transmission mechanism 30 is arranged in third transmission housing space S3 that is isolated from second transmission housing space S2 by bearing retainer 8d that supports transmission output shaft 4, and parking mechanism P is arranged to extend and move along bearing retainer 8d.
   With such arrangement, drive gear 41 connected to transmission output shaft 4 and breather chamber opening 62 of the air breather structure B can be compactly arranged at lower and upper positions of a limited space, as is seen from Fig. 6B. Thus, compact construction of transmission casing 8 is achieved while obtaining a so-called labyrinth effect from the limited space due to provision of parking mechanism P in the limited space.
(f) Bearing retainer 8d is formed with ribs 82d that project toward second transmission housing space S2.
   Thus, oil splashed by drive and driven gears 41 and 42 of final drive gear unit 40 is prevented from directly flying to breather chamber opening 62, which suppresses or at least minimizes the undesired oil blow-out phenomenon form air breather chamber 61.

In the following, modifications of the present invention will be described.

As is seen from Figs. 6A and 6B, in the illustrated embodiment, breather chamber opening 62 and parking mechanism P are arranged offset in a direction of the axes of primary and secondary pulleys 21 and 22. However, if desired, parking mechanism P may be arranged just below breather chamber opening 62, or if desired, parking mechanism P may be arranged at a position to which breather chamber opening 62 just faces.

As will be understood from the above description, in the invention, parking mechanism P is arranged in a passage through which splashed oil (viz., the oil splashed by gears 11 and 12 of speed change gear unit 10 and gears 41 and 42 of final drive gear unit 40) is forced to fly toward breather chamber opening 62. With such arrangement, parking mechanism can serve as a stopper means for stopping or obstructing entering of the splashed oil into breather chamber opening 62.

In the illustrated embodiment, the power transmission is made in the order from speed change gear unit 10, to continuously variable transmission mechanism 20, to stepwise variable transmission mechanism 30 and to final drive gear unit 40. However, if desired, stepwise variable transmission mechanism 30 may be arranged between speed change gear unit 10 and continuously variable transmission mechanism 20. Furthermore, in place of continuously variable transmission mechanism 20, another stepwise variable transmission mechanism may be used.

In the illustrated embodiment, breather chamber opening 62 is positioned above both driven gear 12 of speed change gear unit 10 and drive gear 41 of final drive gear unit 40. However, if desired, breather chamber opening 62 may be arranged above both drive gear 11 of speed change gear unit 10 and driven gear 42 of final drive gear unit 40.

Although the invention has been described above with reference to an embodiment of the invention, the invention is not limited to such embodiment as described above. Various modifications and variations of such embodiment may be carried out by those skilled in the art, in light of the above description.

## Claims

1. An automatic transmission (3) comprising:
a transmission casing (8) that houses therein a speed change mechanism (TM) and a parking mechanism (P), the speed change mechanism including a plurality of rotating members (11, 12, 41, 42) that splash oil when rotated;
an air breather chamber (61) provided by the transmission casing (8), the air breather chamber (61) being communicated with the outside air; and
a breather chamber opening (62) through which an interior of the transmission casing (8) and the air breather chamber (61) are fluidly communicated with each other, the breather chamber opening (62) being exposed to the interior of the transmission casing (8),
wherein the transmission casing (8) has a predetermined housing space (S2) to which the breather chamber opening (62) as well as the rotating members (11, 12, 41, 42) are exposed, and the parking mechanism (P) is projected into the predetermined housing space (S2) at a position between the breather chamber opening (62) and each of the rotating members (11, 12, 41, 42),
**characterized in that**
the parking mechanism (P) includes a manual shaft (51), a parking rod (52), a support actuator (53) and a parking pawl (54),
the breather chamber opening (62) is positioned above the rotating members (11, 12, 41, 42) with respect to a condition wherein the automatic transmission is normally mounted in an associated motor vehicle, the parking rod (52) of the parking mechanism (P) is positioned in the vicinity of the breather chamber opening (62) in a manner to block direct entering of the splashed oil into the breather chamber opening (62) from the rotating members (11, 12, 41, 42) and the breather chamber opening (62) is positioned in the vicinity of an outer surface of the parking rod (52).

2. An automatic transmission as claimed in Claim 1, in which the parking mechanism (P) further comprises:
a cam (56) that is provided on the parking rod to move together with the parking rod (52); wherein
the parking rod (52) is axially moved when a shift lever (L) is manipulated;
the support actuator (53) has a slope (53a) on which the cam (56) moves upward when the shift lever (L) is manipulated; and
the parking pawl (54) is brought into engagement with a parking gear (55) when pressed by the upward moving cam (56).

3. An automatic transmission as claimed in Claim 2, in which the cam (56) is slidably disposed on the parking rod (52) and biased by spring means (56a) to move toward one end of the parking rod (52).

4. An automatic transmission as claimed in Claim 1, 2 or 3, in which the speed change mechanism (TM) comprises a continuously variable transmission mechanism (20) that comprises an input pulley (21) as input means, an output pulley (22) as output means and an endless belt (23) that is put around both the input and output pulleys (21, 22) to serve as power transmission means, in which an interior of the transmission casing (8) is divided by an intermediate wall (8c) into a first transmission housing space (S1) that houses therein the continuously variable transmission mechanism (20) and a second transmission housing space (S2) that houses therein the parking mechanism (P), and in which the breather chamber opening (62) is exposed to the second transmission housing space (S2), the intermediate wall (8c) supporting the primary and secondary pulleys (21, 22).

5. An automatic transmission as claimed in Claim 4, in which the first and second transmission housing spaces (S1, S2) are fluidly communicated with each other through both an open part where a primary pulley bearing (81b) for bearing the primary pulley (21) is arranged and another open part where a secondary pulley bearing (82b) for bearing the secondary pulley (22) is arranged.

6. An automatic transmission as claimed in Claim 4 or 5, in which the speed change mechanism (TM) further comprises a sub-transmission mechanism (30) that is arranged between the secondary pulley (22) and a transmission output shaft (4), in which the sub-transmission mechanism is arranged in a third transmission housing space (S3) that is isolated from the second transmission housing space (S2) by a shaft supporting wall (8d) that supports the transmission output shaft (4), and in which the parking pawl (54) is arranged to pivot over a major surface of the shaft supporting wall (8d).

7. An automatic transmission as claimed in Claim 6, in which the shaft supporting wall (8d) is formed with ribs (82d) that project toward the second transmission housing space (S2).

## Patentansprüche

1. Automatikgetriebe (3), das umfasst:
ein Getriebegehäuse (8), in dem ein Drehzahlwechsel-Mechanismus (TM) und ein Park-Mechanismus (P) aufgenommen sind, wobei der Drehzahlwechsel-Mechanismus eine Vielzahl sich drehender Elemente (11, 12, 41, 42) enthält, die, wenn sie gedreht werden, Öl verspritzen;
eine Entlüftungskammer (61), die durch das Getriebegehäuse (8) gebildet wird, wobei die Entlüftungskammer (61) mit der Außenluft in Verbindung steht; und
eine Entlüftungskammer-Öffnung (62), über die ein Innenraum des Getriebegehäuses (8) und die Entlüftungskammer (61) in Fluidverbindung miteinander stehen, wobei die Entlüftungskammer-Öffnung (62) zum Innenraum des Getriebegehäuses (8) freiliegt,
wobei das Getriebegehäuse (8) einen vorgegebenen Aufnahmeraum (S2) aufweist, zu dem die Entlüftungskammer-Öffnung (62) sowie die sich drehenden Elemente (11, 12, 41, 42) freiliegen, und der Park-Mechanismus (P) an einer Position zwischen der Entlüftungskammer-Öffnung (62) und jedem der sich drehenden Elemente (11, 12, 41, 42) in den vorgegebenen Aufnahmeraum (S2) hinein vorsteht,
**dadurch gekennzeichnet, dass**
der Park-Mechanismus (P) eine Handschaltwelle (51), eine Parksperrstange (52), ein Träger-Stellglied (53) und eine Parksperrklinke (54) enthält,
die Entlüftungskammer-Öffnung (62) in einem Zustand, in dem das Automatikgetriebe normal in einem dazugehörigen Kraftfahrzeug montiert ist, oberhalb der sich drehenden Elemente (11, 12, 41, 42) positioniert ist, die Parksperrstange (52) des Park-Mechanismus (P) in der Nähe der Entlüftungskammer-Öffnung (62) so positioniert ist, dass sie direktes Eindringen des von den sich drehenden Elementen (11, 12, 41, 42) verspritzten Öls in die Entlüftungskammer-Öffnung (62) verhindert, und die Entlüftungskammer-Öffnung (62) in der Nähe einer Außenfläche der Parksperrstange (52) positioniert ist.

2. Automatikgetriebe nach Anspruch 1, wobei der Park-Mechanismus (P) des Weiteren umfasst:
einen Nocken (56), der an der Parksperrstange vorhanden ist und sich zusammen mit der Parksperrstange (52) bewegt, wobei
die Parksperrstange (52) axial bewegt wird, wenn ein Schalthebel (L) betätigt wird;
das Träger-Stellglied (53) eine Abschrägung (53a) aufweist, an der sich der Nocken (56) nach oben bewegt, wenn der Schalthebel (L) betätigt wird; und
die Parksperrklinke (54) in Eingriff mit einem Parksperrrad (55) gebracht wird, wenn der sich nach oben bewegende Nocken (56) auf sie presst.

3. Automatikgetriebe nach Anspruch 2, wobei der Nocken (56) verschiebbar an der Parksperrstange (52) angeordnet ist und durch eine Federeinrichtung (56a) so gespannt wird, dass er sich auf ein Ende der Parksperrstange (52) zu bewegt.

4. Automatikgetriebe nach Anspruch 1, 2 oder 3, wobei der Drehzahlwechsel-Mechanismus (TM) einen stufenlosen Getriebemechanismus (20) umfasst, der eine Antriebs-Riemenscheibe (21) als Antriebseinrichtung, eine Abtriebs-Riemenscheibe (22) als Abtriebs-Einrichtung und einen Endlosriemen (23) umfasst, der sowohl um die Antriebs- als auch die Abtriebs-Riemenscheibe (21, 22) herum gelegt ist und als Kraftübertragungseinrichtung dient, wobei ein Innenraum des Getriebegehäuses (8) durch eine Zwischenwand (8c) in einen ersten Getriebe-Aufnahmeraum (S1), in dem der stufenlose Getriebemechanismus (20) aufgenommen ist, und einen zweiten Getriebe-Aufnahmeraum (S2) unterteilt ist, in dem der Park-Mechanismus (P) aufgenommen ist, und die Entlüftungskammer-Öffnung (62) zu dem zweiten Getriebe-Aufnahmeraum (S2) hin freiliegt und die Zwischenwand (8c) die Primär- sowie die Sekundär-Riemenscheibe (21, 22) trägt.

5. Automatikgetriebe nach Anspruch 4, wobei der erste und der zweite Getriebe-Aufnahmeraum (S1, S2) über einen offenen Teil, in dem ein Lager (81 b) der Primär-Riemenscheibe angeordnet ist, mit dem die Primär-Riemenscheibe (21) gelagert ist, und einen anderen offen Teil, in dem ein Lager (82b) für die Sekundär-Riemenscheibe angeordnet ist, mit dem die Sekundär-Riemenscheibe (22) gelagert ist, in Fluidverbindung miteinander stehen.

6. Automatikgetriebe nach Anspruch 4 oder 5, wobei der Drehzahlwechsel-Mechanismus (TM) des Weiteren einen Hilfsgetriebe-Mechanismus (30) umfasst, der zwischen der Sekundär-Riemenscheibe (22) und einer Getriebe-Abtriebswelle (4) angeordnet ist, der Hilfsgetriebe-Mechanismus in einem dritten Getriebe-Aufnahmeraum (S3) angeordnet ist, der durch eine Wellen-Tragewand (8d), die die Getriebe-Abtriebswelle (4) trägt, gegenüber dem zweiten Getriebe-Aufnahmeraum (S2) isoliert ist, und die Parksperrenklinke (54) so eingerichtet ist, dass sie über einer Hauptfläche der Wellen-Tragewand (8d) geschwenkt wird.

7. Automatikgetriebe nach Anspruch 6, wobei die Wellen-Tragewand (8d) mit Rippen (82d) versehen ist, die auf den zweiten Getriebe-Aufnahmeraum (S2) zu vorstehen.

## Revendications

1. Transmission automatique (3) comprenant :
un carter de transmission (8) qui renferme un mécanisme de changement de vitesse (TM) et un mécanisme de stationnement (P), le mécanisme de changement de vitesse comprenant plusieurs éléments rotatifs (11, 12, 41, 42) qui projettent de l'huile, quand ils tournent ;
une chambre d'aération (61) qui est formée par le carter de transmission (8), ladite d'aération chambre (61) communiquant avec l'air extérieur ; et
une ouverture de chambre d'aération (62) par laquelle l'intérieur du carter de transmission (8) et la chambre d'aération (61) sont en communication de fluide, l'ouverture de chambre d'aération (62) étant exposée à l'intérieur du carter de transmission (8),
étant précisé que le carter de transmission (8) a un espace de réception prédéterminé (S2) auquel sont exposés à la fois l'ouverture de chambre d'aération (62) et les éléments rotatifs (11, 12, 41, 42), et que le mécanisme de stationnement (P) dépasse dans ledit espace de réception prédéterminé (S2) à un endroit situé entre l'ouverture de chambre d'aération (62) et chacun des éléments rotatifs (11, 12, 41, 42),
**caractérisée en ce que** le mécanisme de stationnement (P) comprend un axe manuel (51), une tige de stationnement (52), un actionneur de support (53) et un cliquet de stationnement (54), l'ouverture de chambre d'aération (62) est placée au-dessus des éléments rotatifs (11, 12, 41, 42) par rapport à une condition dans laquelle la transmission automatique est montée normalement dans un véhicule à moteur associé, la tige de stationnement (52) du mécanisme de stationnement (P) est placée près de l'ouverture de chambre d'aération (62) de manière à empêcher une entrée directe de l'huile projetée dans ladite ouverture (62), à partir des éléments rotatifs (11, 12, 41, 42), et l'ouverture de chambre d'aération (62) est placée près d'une surface extérieure de la tige de stationnement (52).

2. Transmission automatique telle que revendiquée dans la revendication 1, dans laquelle le mécanisme de stationnement (P) comprend par ailleurs :
une came (56) qui est prévue sur la tige de stationnement (52) pour se déplacer avec celle-ci ;
étant précisé que la tige de stationnement (52) est déplacée axialement quand un levier de vitesse (L) est actionné ;
que l'actionneur de support (53) a une pente (53a) sur laquelle la came (56) se déplace vers le haut quand le levier de vitesse (L) est actionné ; et
que le cliquet de stationnement (54) est mis en prise avec un engrenage de stationnement (55) quand il est poussé par la came (56) qui se déplace vers le haut.

3. Transmission automatique telle que revendiquée dans la revendication 2, dans laquelle la came (56) est disposée coulissante sur la tige de stationnement (52) et est contrainte par des moyens à ressort (56a) pour se déplacer vers une extrémité de ladite tige de stationnement (52).

4. Transmission automatique telle que revendiquée dans la revendication 1, 2 ou 3, dans laquelle le mécanisme de changement de vitesse (TM) comprend un mécanisme de transmission variable en continu (20) qui comprend une poulie d'entrée (21), comme moyen d'entrée, une poulie de sortie (22), comme moyen de sortie, et une courroie sans fin (23) qui est placée autour des poulies d'entrée et de sortie (21, 22) pour servir de moyen de transmission de puissance, dans laquelle l'intérieur du carter de transmission (8) est divisé par une paroi intermédiaire (8c) en un premier espace de réception de transmission (S1) qui renferme le mécanisme de transmission variable en continu (20), et un deuxième espace de réception de transmission (S2) qui renferme le mécanisme de stationnement (P), et dans laquelle l'ouverture de chambre d'aération (62) est exposée au deuxième espace de réception de transmission (S2), la paroi intermédiaire (8c) supportant les poulies primaire et secondaire (21, 22).

5. Transmission automatique telle que revendiquée dans la revendication 4, dans laquelle les premier et deuxième espaces de réception de transmission (S1, S2) sont en communication de fluide à la fois par une partie ouverte où est disposé un palier de poulie primaire (81b) destiné à supporter la poulie primaire (21), et par une autre partie ouverte où est disposé un palier de poulie secondaire (82b) destiné à supporter la poulie secondaire (22).

6. Transmission automatique telle que revendiquée dans la revendication 4 ou 5, dans laquelle le mécanisme de changement de vitesse (TM) comprend par ailleurs un mécanisme de sous-transmission (30) qui est disposé entre la poulie secondaire (22) et un arbre de sortie de transmission (4), dans laquelle le mécanisme de sous-transmission est disposé dans un troisième espace de réception de transmission (S3) qui est isolé du deuxième espace de réception de transmission (S2) par une paroi de support d'arbre (8d) qui supporte l'arbre de sortie de transmission (4), et dans laquelle le cliquet de stationnement (54) est disposé pour pivoter sur la majeure partie de la paroi de support d'arbre (8d).

7. Transmission automatique telle que revendiquée dans la revendication 6, dans laquelle la paroi de support d'arbre (8d) est pourvue de nervures (82d) qui font saillie vers le deuxième espace de réception de transmission (S2).
